# EUROPEAN PATENT SPECIFICATION

(11) **EP 0 753 184 B1**
(45) Date of publication and mention of the grant of the patent: **09.12.1998**
(21) Application number: 95913285.3
(22) Date of filing: 31.03.1995
(51) Int. Cl.: G06T 15/10

(54) **BUMP MAPPING IN 3-D COMPUTER GRAPHICS**
SCHNELLE ABBILDUNG IN 3-D-RECHNERGRAPHIK
PROJECTION DE RELIEFS EN INFOGRAPHIE TRIDIMENSIONNELLE

(30) Priority: 31.03.1994 GB 9406510
(43) Date of publication of application: 15.01.1997
(73) Proprietor: ARGONAUT TECHNOLOGIES LIMITED, London NW9 5ER (GB)
(72) Inventor: WARNES, Peter, Robert, London E6 1AR (GB)
(74) Representative: Williams, John Francis
(86) International application number: GB9500753
(87) International publication number: WO9527268

(56) References cited:
- EP-A- 0 447 227
- US-A- 5 175 806

## Description

This invention is concerned with 3-D computer graphics, in particular creating a 2-D image in which the various objects and surfaces have a realistic appearance.

The appearance is determined by the perceived surface texture, colour and brightness. In the final rendering, i.e. defining the final coordinates and other parameters of the pixels which go to make up a frame of an image, normally individual calculations are made for each pixel. These calculations link the orientation in space defined by its surface normal, of the relevant spot on a surface with the assumed brightness, colour and direction of the illumination falling on that spot to define how that spot will look to an observer. Such calculations involve complex mathematics and require considerable processing power and memory if they are to be made in real time for realistic animations. Texture mapping and bump mapping are discussed, for example, in '3-D Computer Animation', by Vince, Addison-Wesley (1992).

US-A-5,175,806 discloses a system for applying surface detail to the graphic image of a 3-D object in a 2-D CAD system in which a table is built by storing, in a preprocessing phase, parameters of each scanned pixel in a corresponding location in a buffer. Fast mapping is provided by avoiding time consuming mapping steps.

The invention aims to provide a much simplified method of bump mapping which is faster and requires less processing power, particularly for the animation of computer games.

The invention proposes the use of a look-up table in which a pre-defined limited set of texture parameters is allocated a set of reference codes, and the texture map, which is normally used as the source of data for calculation of the texture of any pixel, consist of an array of reference codes for accessing said texture parameters.

According to the invention there is proposed a method of processing computer graphics information for rendering an image on a display comprising preparing a texture map in which each point is given one of a limited number of codes, each code identifying a parameter set which defines the colour and brightness of that point of the map.

A more detailed example of the operation of the inventive technique will now be described.

In a further development of the invention, the method comprises: a) performing a conversion calculation to produce a set of parameters for each code, which correspond to the location and attitude of a 3-D surface to be mapped; and b) allocating to each frame pixel the set of parameters identified by the code allocated to the point of the texture map corresponding to that pixel.

Initially, a table is prepared in which, out of an infinite number of surface normals which might be calculated for each spot on a surface in 3-D image space, a restricted number e.g. sixteen, are chosen to be representative of the full range. Each of this restricted number is allocated a reference code. In preparing a texture map, the nearest of the sixteen normals to the true normal at a particular spot is chosen for that spot. Each texture map stored in memory, instead of giving detailed information as to the exact topography of the surface, merely gives an approximation in the form of a reference code allocated to each spot in the map.

Using this restricted list of surface normals, a single set of e.g. sixteen, calculations can be made for a polygon with a given light direction, colour, intensity and viewpoint to produce a corresponding list of surface texture characteristics, each allocated the corresponding reference code. This now represents a look-up table for use in rendering a scene into the frame buffer.

When rendering, individual calculations are no longer required for each pixel for the 2-D image. Rather, only the reference code for that texel (texture pixel in the texture map) needs to be read and the look-up table then consulted to find the required lighting intensity for the pixel to be rendered.

Although this technique only gives approximations, it is simple, fast and easily implemented. It is adequate for the animation of e.g. computer games, which do not require great subtlety, and for which speed and minimisation of computing power are important. It is usable effectively only for an assumed single point light source at a great distance.

Since the possible surface normals and their corresponding parameter sets are limited to sixteen, the need to do calculations for any random set of parameters is avoided. However, the pre-calculations of the look-up table are only worthwhile if they are fewer than the pixels being rendered by this means.

## Claims

1. A method of processing computer graphics information for rendering an image on a display comprising preparing a texture map in which each point is given one of a limited number of codes, each code identifying a parameter set which defines the colour and brightness of that point of the map.

2. A method as claimed in claim 1, further comprising: a) performing a conversion calculation to produce a set of parameters for each code, which correspond to the location and attitude of a 3-D surface to be mapped; and b) allocating to each frame pixel the set of parameters identified by the code allocated to the point of the texture map corresponding to that pixel.

3. A method as claimed in claim 2, wherein step a) is used to form a look-up table which is stored for use in step b).

## Patentansprüche

1. Ein Verfahren zum Verarbeiten von Computergraphikinformationen zum Aufbereiten eines Bilds auf einer Anzeige, wobei das Verfahren das Vorbereiten einer Texturtabelle aufweist, bei der jedem Punkt ein Code einer begrenzten Anzahl von Codes zugeordnet wird, wobei jeder Code einen Parametersatz identifiziert, der die Farbe und die Helligkeit dieses Punktes der Tabelle definiert.

2. Ein Verfahren gemäß Anspruch 1, das ferner folgende Schritte aufweist:
a) Durchführen einer Umwandlungsberechnung, um einen Satz von Parametern für jeden Code zu erzeugen, die der Position und der Lage einer 3-D-Oberfläche entsprechen, die tabelliert werden soll; und
b) Zuordnen des Satzes von Parametern zu jedem Rahmenpixel, der durch den Code identifiziert ist, der dem Punkt der Texturtabelle zugeordnet ist, der diesem Pixel entspricht.

3. Ein Verfahren gemäß Anspruch 2, bei dem der Schritt a) verwendet wird, um eine Nachschlagtabelle zu bilden, die zur Verwendung bei dem Schritt b) gespeichert wird.

## Revendications

1. Méthode de traitement de l'information en infographie pour le rendu d'une image sur un affichage, consistant à préparer une carte de texture dans laquelle à chaque point est donné l'un d'un nombre limité de codes, chaque code identifiant un groupe de paramètres qui définit la couleur et la luminosité de ce point de la carte.

2. Méthode selon la revendication 1, comprenant de plus : a) l'accomplissement d'un calcul de conversion pour produire un groupe de paramètres pour chaque code, qui correspondent à l'emplacement et à l'attitude d'une surface tridimensionnelle à mapper; et b) l'allocation, à chaque élément d'image de trame, du groupe de paramètres identifié par le code alloué au point de la carte de texture correspondant à cet élément d'image.

3. Méthode selon la revendication 2, où l'étape a) est utilisée pour former une table de consultation qui est stockée pour une utilisation à l'étape b).
